Europäisches Patentamt

(19) European Patent Office

Office européen des brevets

(11) Publication number: **0 005 463**
**B1**

(12) **EUROPEAN PATENT SPECIFICATION**

(45) Date of publication of patent specification: **13.10.82**

(21) Application number: **79101249.5**

(22) Date of filing: **25.04.79**

(51) Int. Cl.³: **B 23 P 19/02**

(54) Mechanism and method for extracting tubes.

(30) Priority: **18.05.78 US 907239**

(43) Date of publication of application:
**28.11.79 Bulletin 79/24**

(45) Publication of the grant of the patent:
**13.10.82 Bulletin 82/41**

(84) Designated Contracting States:
**DE FR GB NL**

(56) References cited:
**GB - A - 30 121**
**US - A - 1 964 023**
**US - A - 3 835 520**

(73) Proprietor: **CARRIER CORPORATION**
**Carrier Tower P.O. Box 4800**
**Syracuse New York (US)**

(72) Inventor: **Miller, Charlie D.**
**6570 Rutger Road**
**East Syracuse New York (US)**

(74) Representative: **Baillie, Iain Cameron et al,**
**c/o Ladas & Parry Isartorplatz 5**
**D-8000 München 2 (DE)**

Courier Press, Leamington Spa, England.

## Mechanism and method for extracting tubes

This invention relates to a mechanism and method for extracting tubes from a tube sheet.

Heat exchangers are often comprised of a multiplicity of heat exchange tubes which extend between and are generally supported by at least one tube sheet. The tube sheet has a series of holes cut therein, the tubes are inserted into the holes in the tube sheet, and then the tubes are expanded in the area of the tube sheet so that pressure contact exists between the tubes and the tube sheet.

At times, due to malfunctions or normal maintenance, it is necessary to remove one or even all of the tubes used in a given heat exchanger unit. Heretofore, various mechanisms have been employed for extracting tubes from tube sheets. Typically, these devices include expansion means having a rearwardly tapered wedge that extends longitudinally through a radially expandable jaw means, and the jaw means is expanded by pulling the expansion means toward the back of the device. This movement brings the tapered portion of the wedge into contact with the inside of the jaw means, and further rearward movement of the wedge forces the jaw means radially outward into the inner surface of the tube. Once the jaw means securely grips the tube, the jaw means is pulled toward the back of the extracting mechanism, pulling the tube from the tube sheet. Thus, it is seen that movement in the same direction — toward the back of the extracting mechanism — is used to both expand the jaw means and pull the tube from the tube sheet.

The prior art devices, for a number of reasons, have not been entirely satisfactory. First, the range of sizes of tubes that can be extracted by each device has been relatively limited. This is due, inter alia, to the fact that the extent to which the jaw means can expand radially has been fairly narrow. Second, the backwards movement of the expansion means, which expands the jaw means radially, frequently causes the jaw means to also move backwards before the jaw means develops a secure grip on the tube. This results in the jaw means dragging against the inside surface of the tube, which deleteriously affects the jaw means.

Moreover, a serious problem with prior art devices has been that the jaw means frequently break. Several factors contribute to this problem. One of these factors is that, commonly, the back of the jaw means is rigidly secured to a part of the extracting mechanism which does not move radially with the jaw means. The jaw means, as it is pushed outward radially, bends relative to this fixed part, resulting in what can be a significant strain on the jaw means. Further, the prior art arrangements typically result in a relatively small area of contact between the jaw means and the expansion means. The expansion means is not able to provide evenly distributed support for the jaw means as the jaw means is forced into pressure contact with the tube, resulting in high, localized stresses in the jaw means.

Examples of such prior art devices are the disclosures in U.S. Patent 1,964,023 and British Patent 30,121 (1909). United States Patent 1,964,023 discloses a tube pulling device wherein an expansion means is pulled rearward to expand a jaw means into gripping contact with a tube, and then the jaw means itself is pulled rearward to pull the tube out of a tube sheet. British Patent 30,121 (1909) discloses a device for pulling tubes from a boiler and includes an expandable member and rod. The rod is moved forward to expand member into engagement with a tube whereupon the entire tube pulling device is moved rearward to pull the tube out of the boiler.

According to one aspect of the present invention there is provided a tube extracting mechanism including an elongated frame defining an opening in the front end thereof and a longitudinally extending passageway in communication with the opening, a back plate located rearward of the frame, a mid plate located between the back plate and the frame, a sleeve positioned in the passageway and slidably supported by the frame for longitudinal movement within the passageway in a first direction towards the opening and in a second direction away from the opening, said sleeve being connected to said mid plate for unitary longitudinal movement therewith, and an expandable jaw structure supported by the sleeve for longitudinal movement therewith through the opening, characterized in that the back plate and mid plate are connected for unitary longitudinal movement, in that an expansion activator cooperates with the expandable jaw structure to expand said jaw structure upon longitudinal movement of said expansion activator in said first direction, in that an expansion power drive is connected to the back plate for unitary longitudinal movement therewith and to the expansion activator for imparting longitudinal movement in the first direction thereto, and in that a further power drive is connected to the frame and to the back plate for imparting longitudinal movement in the second direction to the back plate, the mid plate, the sleeve, and the expandable jaw structure.

According to a further aspect of the invention there is provided a tube extracting mechanism including an elongated frame defining an opening in the front end thereof and a longitudinally extending passageway in communication with the opening, a sleeve positioned in the passageway and slidably supported by the frame for longitudinal movement within the passageway in a first direction towards the opening and in a second direction away from the opening, and an expandable jaw structure supported by the sleeve for longitudinal movement therewith through the opening, characterized by an expansion activator in communication with the expandable jaw structure for expanding the jaw structure upon longitudinal movement of the expansion activator in the first direction, an expansion power drive including a first longitudinally reciprocable hydraulic cylinder for imparting longitudinal movement in the first direction to the expansion activator, a pulling power drive including a second longitudinally reciprocable hydraulic cylinder connected to the frame for imparting longitudinal movement in the second direction to the sleeve and expandable jaw structure, a source of pressurized hydraulic fluid, an hydraulic fluid circuit connecting the first and second hydraulic cylinders to the source of pressurized fluid and including a circuit control valve having an advance position for directing pressurized fluid to the first and second hydraulic cylinders to extend the cylinders, and a neutral position for preventing pressurized fluid from flowing to the cylinders, an expansion cylinder control valve having an open position allowing pressurized fluid to flow to the first hydraulic cylinder to extend the cylinder and a closed position preventing pressurized fluid from flowing to the first cylinder, and a pulling cylinder control valve having an open position allowing pressurized fluid to flow to the second hydraulic cylinder to extend the cylinder and a closed position for preventing pressurized fluid from flowing to the second cylinder and a control including first means to move the circuit control valve to the advance position, second means to move the expansion cylinder control valve to the closed position, and third means to move the pulling cylinder control valve to the open position.

The invention will now be described with reference to the accompanying drawings, in which

Figure 1 is a perspective view of a tube extracting mechanism constructed in accordance with the present invention;

Figures 2 through 4 are longitudinal sectional views of the extracting mechanism shown in Figure 1 illustrating the mechanism in various stages of operation;

Figure 5 is a schematic view of the hydraulic circuit of the extracting mechanism shown in Figures 1 through 4;

Figure 5A is a schematic view of a portion of an alternate hydraulic circuit; and

Figure 6 is a schematic view of the electrical circuit of the extracting mechanism shown in Figures 1 through 4.

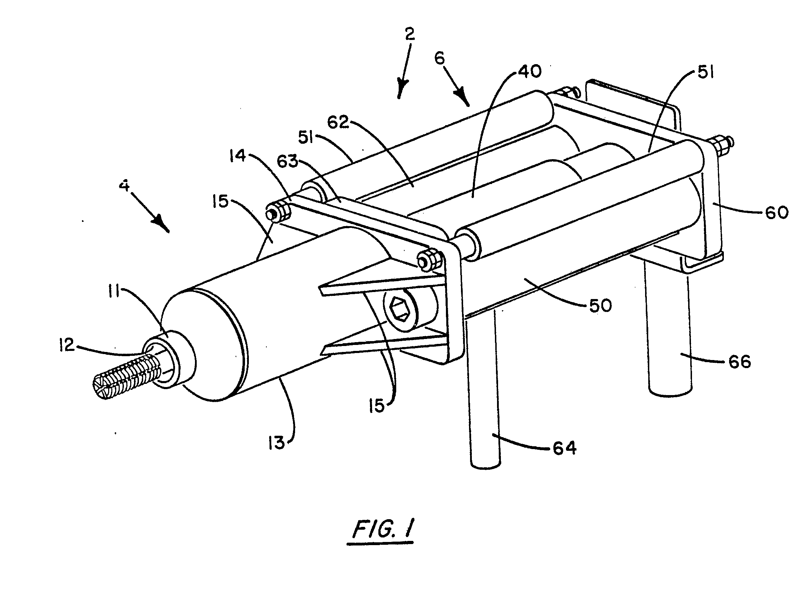

Figure 1 depicts a tube extracting mechanism 2 constructed in accordance with the present invention. Extracting mechanism 2 comprises, generally, an elongated, stationary frame or assembly 4, a movable frame or assembly 6. Stationary frame 4 includes a nose piece 11 defining an opening 12 in the front end of the stationary frame, a cylindrical housing section 13, a front plate 14, and braces 15. The front end of cylindrical housing section 13 is connected to nose piece 11, and the back end of the cylindrical housing section is connected to front plate 14. Braces 15 serve to reinforce the connection between cylindrical housing section 13 and front plate 14. Movable frame 6 includes expansion power means 40, pulling power means 50, back plate 60, longitudinal connecting member 62, and mid plate 63. Back plate 60 and mid plate 63 are connected by means of connecting members 62 for unitary longitudinal movement. Grips 64 and 66 are provided to facilitate handling of the mechanism 2.

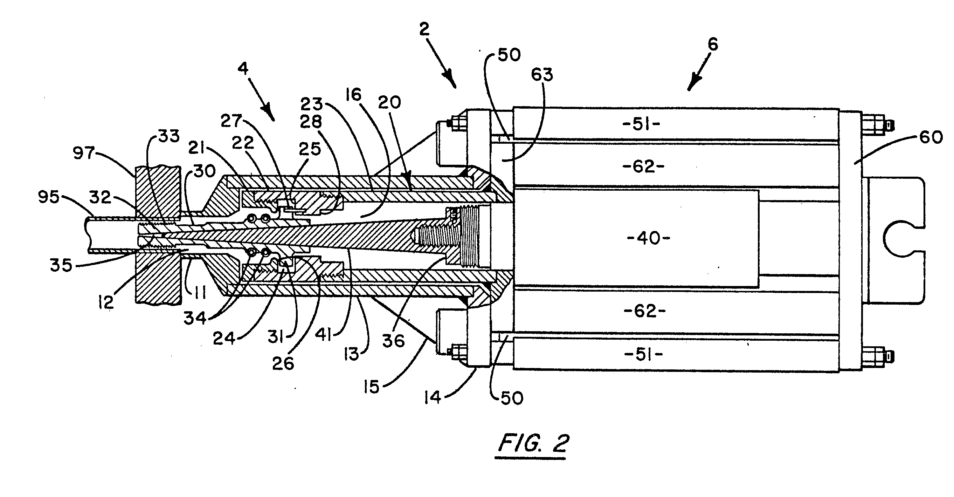

Referring now to Figures 2 through 4, cylindrical housing section 13 defines a longitudinally extending passageway 16 in communication with opening 12. The extracting mechanism 2 also comprises a sleeve 20 located in passageway 16 and slidably supported by cylindrical housing section 13 for longitudinal movement within the passageway. Within passageway 16, sleeve 20 can slide forward toward nose piece 11 and front opening 12, and the sleeve can slide rearward away from the nose piece and front opening. In the preferred embodiment illustrated in the drawings, sleeve 20 includes a front member 21, an intermediate member 22, and a back member 23, although it will be obvious to one skilled in the art that the intermediate and back members could be comprised of a single unitary member.

The tube extracting mechanism 2 further comprises an expandable jaw means 30. In the position shown in Figure 2, jaw means 30 extends longitudinally from within sleeve 20 forward through nose piece 11, and through front opening 12. In this position, the extracting mechanism 2 can be placed against a tube sheet with nose piece 11 abutting the tube sheet and jaw means 30 extending inside a tube. Expandable jaw means 30 is comprised of a plurality of separate, longitudinally extending pieces 32, having gripping teeth 33 located at one end thereof. Pieces 32 cooperate to define an elongated, conically shaped cavity 35 extending through the center of expandable jaw means 30. Retaining means 34 such as garter springs are provided to urge individual pieces 32 radially inward, insuring that jaw means 30 contracts radially when this is desired.

Using separate pieces 32 to form jaw means 30 has several advantages. First, pieces 32, and hence expandable jaw means 30, can move outward radially without requiring bending by an individual component of the jaw means. Thus, bending forces and their resulting stresses are eliminated. Second, should some part of jaw means 30 need to be replaced, it is not necessary to remove and replace the entire jaw means; but, rather, it is necessary to replace only the individual piece 32 having the part which needs to be replaced. In this manner, both the cost and difficulty of maintaining expandable jaw means 30 are reduced. Preferably, pieces 32 are shaped so that, when jaw means 30 is in the retracted position shown in Figures 1 and 2, the radial cross section of the jaw means extending through the outer edges of teeth 33 has a circular shape. As the jaw means 30 expands, this circular shape becomes distorted because the outside curvature of the teeth does not change while the radius of the cross section increases. In the mode illustrated in the drawings, jaw means 30 is comprised of five separate pieces 32. It has been found that five pieces produces a very good compromise between the strength of the jaw means, which decreases as the number of pieces increases, and the above-mentioned distortion, which also decreases as the number of pieces increases.

The rearward portion of pieces 32 include radially extending flanges 31. Flanges 31 cooperate with a recess 24 defined by front and intermediate members 21 and 22 of sleeve 20 to cause expandable jaw means 30 to move longitudinally with the sleeve. As sleeve 20 moves forward relative to expandable jaw means 30, a radially extending portion 25 of intermediate member 22 comes into abutting contact with rear portion of the flanges 31, forcing the expandable jaw means to move with the sleeve. Similarly, as sleeve 20 moves backward relative to expandable jaw means 30, a radially extending portion 26 of front member 21 comes into abutting contact with the front portion of flanges 31, causing the jaw means to move with the sleeve. Recess 24, though, allows for radial movement of expandable jaw means 30, and the recess allows for a small amount of relative longitudinal movement between the jaw means and sleeve 20 to prevent the recess from binding flanges 31 during radial expansion of the jaw means.

Over a period of time, teeth 33 of expandable jaw means 30 may become encrusted with deposits. Gripping teeth of tube extracting mechanisms of the type disclosed herein are commonly cleaned by moving or rotating a brush or other cleaning device around the toothed portion of jaw means 30. When this is done, the brush tends to rotate jaw means 30 about its longitudinal axis. Such rotation hinders cleaning of the teeth. To facilitate cleaning of the teeth 33 of the device disclosed herein, at least a segment of one of the flanges 31 is somewhat shorter radially than the other flanges, and a small, longitudinally extending pin 27 is located in the recess 24 in an overlaying relationship with respect to this shorter segment. Pin 27 permits radial expansion of jaw means 30; but, as the jaw means starts to rotate about its longitudinal axis, either a side of the flange having the shorter segment or the side of a neighboring flange comes into abutting contact with pin 27, preventing further rotation.

Expansion power means 40 and expansion means 41 such as a mandrel are provided for expanding jaw means 30 radially. In a preferred embodiment, expansion power means 40 is a hydraulic cylinder having a head end and a piston end. The head end is connected to back plate 60 so that the two move together longitudinally, and extends forward therefrom coming into abutting contact with mid plate 63. The piston end of cylinder 40 extends forward from the front end of the head end, through mid plate 63. Mandrel 41 is connected to the piston end of cylinder 40 and includes a longitudinally extending, generally conically shaped portion wider at the back and gradually reducing in width toward the front until terminating at a point. Mandrel 41 extends from the piston end of cylinder 40 forwards within sleeve 20 and into longitudinal cavity 35 of expandable jaw means 30.

As hydraulic cylinder 40 expands, the piston end of the cylinder and mandrel 41 move forward longitudinally toward nose piece 11 and front opening 12 and away from back plate 60. The tapered mandrel 41 moves forward within longitudinal cavity 35 of expandable jaw means 30. This tends to force jaw means 30 forward and outward. Recess 24 of sleeve 20 limits forward movement of jaw means 30, but allows outward, radial movement. Thus, forward movement of mandrel 41 forces expandable jaw means 30 outward radially. Outward, radial movement of jaw means 30 and, hence, forward movement of mandrel 41 is limited by a radially extending shoulder 36 of the mandrel and a radially extending portion 28 of intermediate member 22 of sleeve 20. That is, mandrel 41 can move forward until shoulder 36 of mandrel 41 comes into abutting contact with portion 28 of intermediate member 22, and this abutting contact prevents further forward movement of the mandrel and further outward movement of the jaw means. As will be shown below, extension of expansion hydraulic cylinder 40 and, hence, forward movement of mandrel 41 and radial expansion of jaw means 30 are also pressure regulated and will terminate when a preset pressure is reached between the jaw means and the inside surface of a tube.

With the prior art devices, as exemplified by those shown in the above-cited references, as well as with Applicant's mechanism, as the expansion means or mandrel moves to expand the jaw means into pressure contact with the inside surface of a tube, the mandrel comes into contact with the jaw means directly below the gripping teeth of the jaw means. This is desirable because it provides localized support for the teeth, which are in direct pressure contact with the tube. Further, it is the contact between the mandrel and the jaw means that expands the jaw means. The prior art devices expand the jaw means by rearward movement of the mandrel. This requires, in order that the above-discussed localized tooth support be provided, that the mandrel extend, when the jaw means is in the retracted position, forward of the toothed section of the jaw means. With Applicant's unique apparatus and method, on the other hand, since the mandrel moves forward to expand the jaw means — the opposite of the prior art — the mandrel does not have to extend forward of the toothed section when the jaw means is retracted. The mandrel may come, as shown in Figure 2, to a tapered end within the toothed section of the jaw means.

Bringing mandrel 41 to a tapered end within jaw means 30 has several advantages. The narrowest width of longitudinal cavity 35 defined by jaw means 30 is decreased, increasing the difference between the widest and narrowest widths of the cavity which communicate with mandrel 41. Also, the narrowest width of mandrel 41 is decreased, increasing the difference between the widest and narrowest widths of the mandrel which communicate with cavity 35. Since these differences determine the expansion range of jaw means 30, Applicant's invention, by increasing these differences, increases the expansion range of the jaw means, increasing the utility of the extracting mechanism 2. These increased differences also allow the minimum width of jaw means 30 to be decreased, and, at the same time, allow the width of the separate pieces 32 to be increased. The decreased minimum width of jaw means 30 increases freedom of movement of the jaw means within a tube. The greater width of pieces 32, which comprise jaw means 30, increases the strength of the pieces 32, increasing the strength of the jaw means.

A further advantage of the device disclosed herein is that the longitudinal slope of cavity 35 remains substantially constant as jaw means 30 expands radially. Moreover, this slope generally equals the longitudinal slope of the conical portion of mandrel 41. In this manner, as mandrel 41 moves forward within cavity 35, the mandrel and the surface of jaw means 30 which defines longitudinal cavity 35 are in contact for substantially their entire common length. The mandrel 41 provides a very evenly distributed support for jaw means 30, reducing the maximum stress felt at any one point of the jaw means and increasing the operational lifespan of the jaw means.

Pulling power means 50 is provided to move jaw means 30 longitudinally with respect to stationary frame 4. In a preferred mode, the pulling power means includes a pair of hydraulic cylinders 50 each having a piston end secured to front plate 14 of stationary frame 4, and a head end connected to back plate 60 of movable frame 6. Springs 51, also arranged between front plate 14 and back plate 60, are provided to bias the cylinders 50 to the retracted position. As pulling hydraulic cylinders 50 extend, back plate 60, connecting members 62 and mid plate 63 are forced apart from front plate 14. Similarly, when hydraulic cylinders 50 retract, back plate 60, connecting members 62 and mid plate 63 are brought toward front plate 14. Sleeve 20, and more particularly back member 23 of the sleeve, is connected to back plate 60 through connecting members 62 and mid plate 63 so that, as the back plate 60 moves relative to stationary frame 4, either toward the front of the stationary frame or away from the front of the stationary frame, the sleeve moves in a similar fashion relative to the stationary frame. Connecting members 62 are curved to closely fit against the generally cylindrical hydraulic cylinders 50 and also act as guides for the cylinders as they extend and retract.

As sleeve 20 is moved by pulling hydraulic cylinders 50, recess 24 of the sleeve and flanges 31 of expandable jaw means 30 cooperate, in the manner described above, to move the jaw means with the sleeve. As discussed above, the head end of expansion hydraulic cylinder 40 is connected to back plate 60 and moves with the back plate. Moreover, as explained below, when pulling power cylinders 50 extend, pressurized fluid is locked into expansion cylinder 40 so that the piston end of the cylinder and mandrel 41, which is connected to the piston end, moves with the head end of the cylinder. Thus, as pulling hydraulic cylinders 50 expand, jaw means 30 and mandrel 41 both move rearward with back plate 60 and, hence, with each other. This unitary movement of jaw means 30 and mandrel 41 has the effect of causing the jaw means to maintain the same degree of radial expansion as it moves rearward.

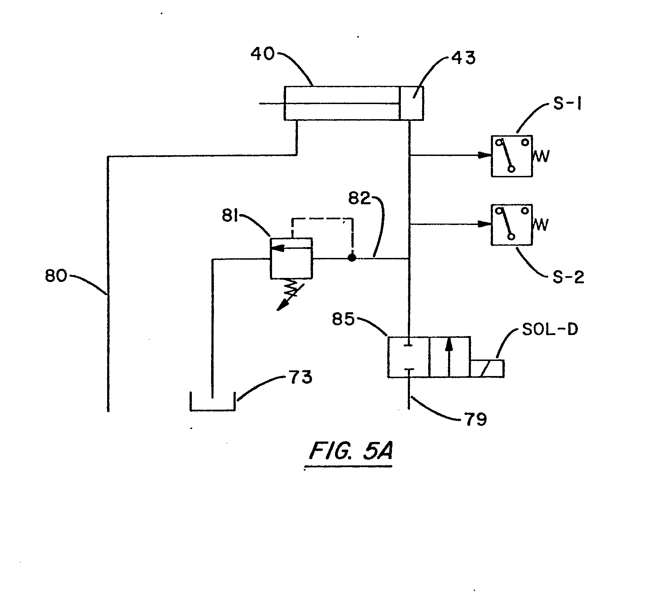

The control circuit for the extracting mechanism 2 is preferably electro-hydraulic. The hydraulic circuit is shown in Figure 5, and the electric circuit is shown in Figure 6. Referring to Figure 5, the hydraulic circuit includes a motor 70 that operates a hydraulic pump 71. Pump 71 is connected through line 72 to a source of fluid represented by reservoir 73. The discharge from pump 71 flows through line 74 and passes through a three position control valve 75. Preferably, control valve 75 is biased toward a center position by, for example, opposed springs (not shown), and means such as electrically activated solenoids A and B are provided to move the control valve to the right and left, respectively, as viewed in Figure 5. When control valve 75 is in the center, or neutral, position the discharge from pump 71 is directed back to reservoir 73 through line 76.

When solenoid A is activated, control valve 75 is moved to the right, to an advance position, and the discharge from pump 71 passes through control valve 75 to fluid line 77 and to branch lines 78 and 79. Branch line 79 directs the fluid to the head end of expansion hydraulic cylinder 40. When pressurized fluid flows through line 79 to cylinder 40, the fluid pushes a piston 43, located in the cylinder, to the left as viewed in Figure 5, expanding the cylinder. As discussed above, expansion of cylinder 40 causes radial expansion of jaw means 30. A pilot activated fluid pressure valve 81 is in fluid communication with line 79 via line 82 and regulates the maximum pressure reached in line 79. Valve 82 is biased toward a closed position, and opens when the pressure in line 79 reaches a predetermined level. When this pressure level is reached, fluid is vented from line 79, through line 82, through the valve 81, and to reservoir 73. In this manner, expansion hydraulic cylinder 40 expands jaw means 30 until a predetermined pressure is reached between the jaw means and the inside surface of a tube.

At the same time that branch line 79 directs fluid to the head end of expansion cylinder 40, branch line 78 directs fluid to the head ends of pulling hydraulic cylinders 50. When pressurized fluid flows through line 78 to the cylinders 50, the fluid pushes pistons 52, located in the cylinders, to the left as viewed in Figure 5, expanding these cylinders. Expansion of cylinders 50, as explained above, cause back plate 60, sleeve 20, and expandable jaw means 30 all to move backwards relative to stationary frame 4. Referring back to Figures 1 through 4, the expansion of hydraulic cylinders 50 extend external springs 51, which urge the cylinders toward the retracted position. Returning to Figure 5, additional springs 53, located within cylinders 50, are contracted when the cylinders are extended, further urging the cylinders to the retracted position.

The hydraulic fluid circuit also includes control valve 84, placed in line 78, and control valve 85, placed in line 79, for regulating the fluid flow through the respective fluid lines. Each control valve has two positions: an open position, allowing fluid to flow through the line in which the valve is located, and a closed position, preventing fluid from flowing through the line. Valve 84 is biased toward the open position, and valve 85 is biased toward the closed position. Control means, preferably electrically actuated solenoids C and D, are provided for, respectively, moving control valve 84 to the closed position and moving control valve 85 to the open position. Automatic sequential activation of solenoids C and D provides automatic successive extension of expansion hydraulic cylinder 40 and pulling hydraulic cylinders 50. This, in turn, results in the extracting mechanism automatically, first, expanding jaw means 30 into contact with the inside surface of a tube; and then, second, pulling the tube out of the tube sheet.

Returning to solenoid B. when this solenoid is activated, control valve 75 is moved to the left as viewed in Figure 5, to a retract position, and pressurized fluid flows through control valve 75 to line 80. Fluid line 80 directs the pressurized fluid to the piston end of expansion hydraulic cylinder 40. The fluid pushes cylinder piston 43 toward the head end of the cylinder, causing the cylinder to retract. Fluid forced out of the head end of hydraulic cylinder 50 passes through fluid lines 79 and 77, through control valve 75, through fluid line 76, and to the reservoir 73. Concurrently, fluid is vented from the head ends of pulling hydraulic cylinders 50, under pressure of springs 51 and 53, contracting these cylinders. The vented fluid from cylinders 50 passes through lines 78 and 77, through control valve 75, through fluid line 76, and to reservoir 73.

Referring to Figure 6, the electric control circuit for the extracting mechanism 2 includes a switch 90 to actiate motor 70, which is connected through the switch to a source of electrical energy represented by lines L1 and L2. The electrical circuit also includes a normally open advance switch 91 and a retract switch 93, normally in the position shown in the full line in Figure 6. Closing switch 91 activates a timer means T and closes switches S-1 and S-2. Switches S-1 and S-2 are located in series with, respectively, solenoids D and C. When switches 91, S-1 and S-2 are closed, solenoids A, C, and D are activated, causing, as discussed above, jaw means 30 to expand radially into pressure contact with the inside surface of a tube. The timer means T automatically deactivates after a predetermined period of time and, upon deactivation of timer means T, switches S-1 and S-2 are opened. This deactivates solenoids C and D, locking jaw means 30 into contact with the inside of the tube and causing pulling power cylinders 50 to expand, pulling the tube out of the tube sheet. When the tube is released from the tube sheet, switch 91 is opened and switch 93 is moved to broken line position shown in Figure 6. This deactivates solenoid A and activates solenoid B. Pulling cylinders 50 and expansion cylinder 40 are retracted, and the grip which jaw means 30 has on the tube is released. When cylinders 40 and 50 are completely retracted, switch 93 is moved back to the full line position.

Although preferably switches S-1 and S-2 are time responsive, opening upon deactivation of timer means T, they could be pressure responsive, opening when a predetermined pressure is reached in the fluid line 79 leading to the head end of expansion hydraulic cylinder 40. Such an arrangement is shown in Figure 5A.

Although the operation of extracting mechanism 2 and the method embodying the present invention has been discussed somewhat above, this operation will now be more fully described. In the retracted or inactive position, shown in Figure 1, expandable jaw means 30 extends through nose piece 11 and front opening 12 of stationary frame 4, and hydraulic cylinders 40 and 50 are fully retracted. With respect to the hydraulic circuit shown in Figure 5, control valve 75 is in the central or neutral position, control valve 84 is in the open position, and control valve 85 is in the closed position. Concerning the electric circuit depicted in Figure 6, switches 90 and 91 are open, and switch 93 is in the solid line position shown in the Figure.

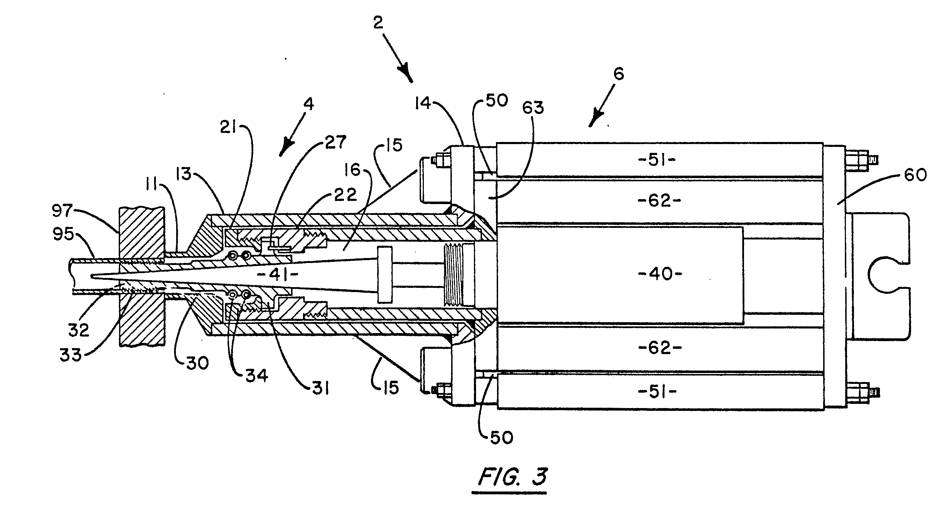

To extract a tube 95 from a tube sheet 97, shown in Figures 2 through 4, switch 90 is closed, activating motor 70 and pump 71, and extracting mechanism 2 is moved so that jaw means 30 is inserted into the tube and nose piece 11 abuts against the tube sheet. This position is shown in Figure 2. Then switch 91 is closed, activating solenoids A, C, and D, and timer means T, and closing switches S-1 and S-2. As solenoid A is activated, threeway fluid flow control valve 75 is moved to the advance position. This directs fluid from pump 71 to line 77 and into lines 78 and 79. At the same time, activation of solenoid C moves valve 84 to the closed position, preventing fluid from flowing through line 78; and activation fluid to flow through line 79 to the head end of expansion hydraulic cylinder 40, causing that cylinder to extend. Extension of expansion hydraulic cylinder 40 moves expansion means 41 to the left as viewed in Figure 2 forcing expandable jaw means 30 outward radially. This continues and expandable jaw means 30 comes into contact with the inside surface of tube 95. This position is shown in Figure 3. Pressure builds up in expansion cylinder 40 and fluid line 79, causing pressure to build up between jaw means 30 and the inside surface of the tube 95, until the predetermined pressure is reached, opening pressure relief valve 81. The pressure at which relief valve 81 opens can be set, depending on the size and type of the tube 95, to insure that a secure grip is developed between jaw means 30 and the inside surface of the tube.

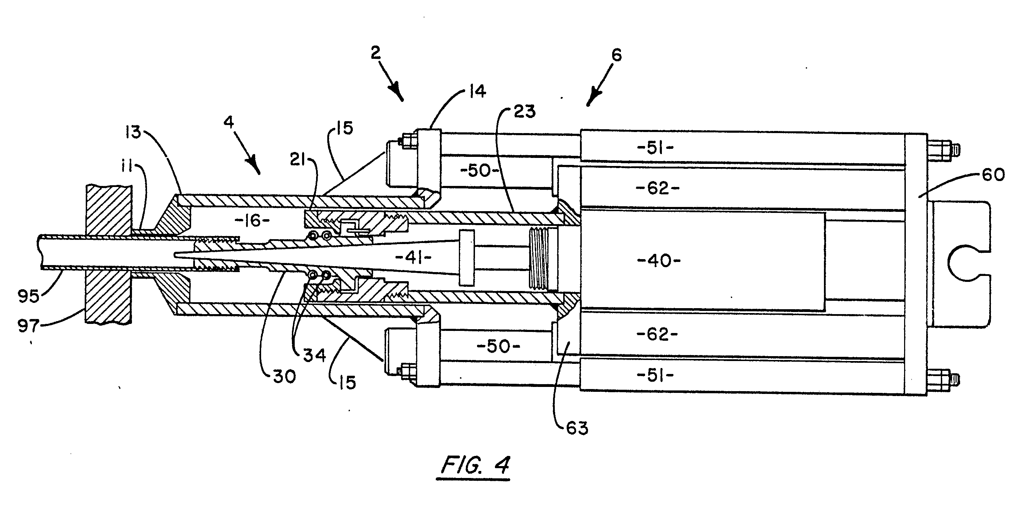

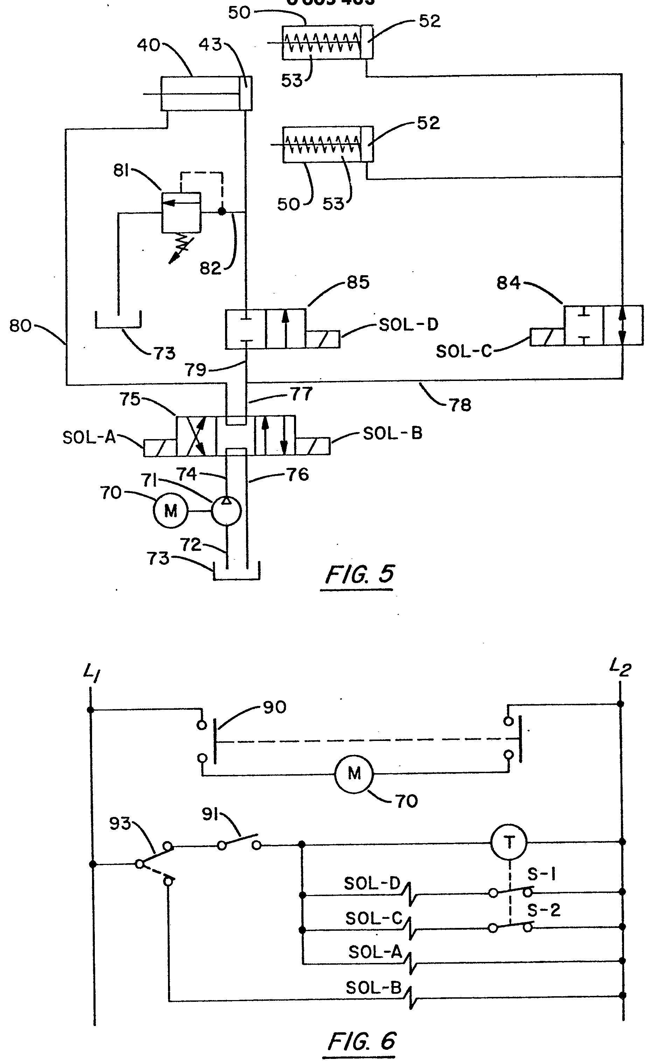

After a predetermined length of time, timer means T automatically deactivates. This time length can be adjusted to insure that expansion hydraulic cylinder 40 is given a sufficient amount of time to develop the desired pressure between jaw means 30 and the inside surface of tube 95. Deactivation of the timer means opens switches S-1 and S-2, deactivating solenoids C and D. When this occurs, control valve 85 moves to the closed position, locking the pressurized fluid in expansion hydraulic cylinder 40; and control valve 84 moves to the open position, allowing pressurized fluid to flow through line 78 to extend pulling hydraulic cylinders 50. As pulling power cylinders 50 extend, back plate 60 is pushed rearwardly relative to stationary frame 4 and tube sheet 97. This pulls connecting pieces 62, mid plate 63, sleeve 20, and expandable jaw means 30 rearwardly. Rearward movement of back plate 60 and mid plate 63 also pulls expansion hydraulic cylinder 40 and mandrel 41 rearwardly. Thus, the relative position between jaw means 30 and the mandrel 41 is maintained, maintaining the secure grip which jaw means 30 has on tube 95. This grip is sufficient to pull tube 95 out of tube sheet 97; and, thus, extension of pulling hydraulic cylinders 50 pulls tube 95 out of tube sheet 97, as shown in Figure 4. This pulling process continues until pulling hydraulic cylinders 50 are fully extended.

To release the grip which jaw means 30 has on tube 95 and to return extracting mechanism 2 to the retracted position, advance switch 91 is opened and retract switch 93 is moved to the position shown in broken lines in Figure 6. This activates solenoid B and deactivates solenoid A, causing control valve 75 to move to the left, as viewed in Figure 5, to the retract position. Pressurized fluid is now directed through line 80 to the piston end of expansion hydraulic cylinder 50, retracting that cylinder. This pulls mandrel 41 rearwardly, and expandable jaw means 30, acting under the pressure of retaining means 34, contracts radially. This frees tube 95 from jaw means 30, and extracting mechanism 2 can be pulled away from the tube and tube sheet 97. Then, tube 95 can be manually pulled completely out of tube sheet 97.

Fluid forced out of the head end of cylinder 50, as that cylinder retracts, passes to reservoir 73 via lines 79 and 82. Moving control valve 75 to the retract position also vents fluid, under pressure of springs 51 and 53, from pulling hydraulic cylinders 50 via lines 78, 77, and 76, allowing those cylinders to retract. Retract switch 93 is held in the broken line position, maintaining control valve 75 in the retract position, until expansion cylinder 40 and pulling cylinders 50 completely retract. As this occurs, sleeve 20, jaw means 30, and mandrel 41 return to the retracted position. When this occurs, switch 93 is moved to the solid line position, deactivating solenoid B so that hydraulic control valve 75 returns to the neutral position, and the extracting mechanism 2 is ready to pull the next tube.

While it is apparent that the invention herein disclosed is well calculated to fulfill the objects above stated, it will be appreciated that numerous modifications and embodiments may be devised by those skilled in the art, and it is intended that the appended claims cover all such modifications and embodiments that fall within the true spirit and scope of the invention.

**Claims**

1. A tube extracting mechanism including an elongated frame (4, 6) defining an opening (12) in the front end thereof and a longitudinally extending passageway (16) in communication with the opening (12), a back plate (60) located rearward of the frame (4, 6), a mid plate (63) located between the back plate (60) and the frame (4, 6), a sleeve (20) positioned in the passageway (16) and slidably supported by the frame (4, 6) for longitudinal movement within the passageway (16) in a first direction towards the opening (12) and in a second direction away from the opening (12), said sleeve (20) being connected to said mid plate (63) for unitary longitudinal movement therewith, and an expandable jaw structure (30) supported by the sleeve (20) for longitudinal movement therewith through the opening (12), characterized in that the back plate (60) and mid plate (63) are connected (62) for unitary longitudinal movement, in that an expansion activator (41) cooperates with the expandable jaw structure (30) to expand said jaw structure upon longitudinal movement of said expansion activator (41) in said first direction, in that an expansion power drive (40) is connected to the back plate (60) for unitary longitudinal movement therewith and to the expansion activator (41) for imparting longitudinal movement in the first direction thereto, and in that a further power drive (50) is connected to the frame (4, 6) and to the back plate (60) for imparting longitudinal movement in the second direction to the back plate (60), the mid plate (63), the sleeve (20), and the expandable jaw structure (30).

2. A tube extracting mechanism as claimed in claim 1, characterized in that a surface of the jaw structure (30) defines a longitudinally extending tapered cavity (35) and in that the expansion activator (41) includes a longitudinally extending tapered portion disposed within the cavity (35), the longitudinal taper of the cavity (35) remaining substantially constant as the jaw structure (30) expands and the longitudinal taper of the expansion activator (41) being substantially equal to the longitudinal taper of the cavity (35) so that, as the expansion activator (41) moves longitudinally with respect to the expandable jaw structure (30), the tapered portion of the expansion activator (41) and the surface of the expandable jaw structure (30) which defines the cavity (35) remain in contact for substantially their entire common length.

3. A tube extracting mechanism as claimed in claim 1 or claim 2, characterized in that abutting contact between the frame (4, 6) and the mid plate (63) limits longitudinal movement of the mid plate (63) in the first direction, and in that abutting contact between the mid plate (63) and the expansion power drive (40) assists moving the expansion power drive (40) with the back plate (60).

4. A tube extracting mechanism including an elongated frame (4, 6) defining an opening (12) in the front end thereof and a longitudinally extending passageway (16) in communication with the opening (12), a sleeve (20) positioned in the passageway (16) and slidably supported by the frame (4, 6) for longitudinal movement within the passageway (16) in a first direction towards the opening (12) and in a second direction away from the opening (12), and an expandable jaw structure (30) supported by the sleeve (20) for longitudinal movement therewith through the opening (12), characterized by an expansion activator (41) in communication with the expandable jaw structure (30) for expanding the jaw structure (30) upon longitudinal movement of the expansion activator (41) in the first direction, an expansion power drive including a first longitudinally reciprocable hydraulic cylinder (40) for imparting longitudinal movement in the first direction to the expansion activator (41), a pulling power drive including a second longitudinally reciprocable hydraulic cylinder (50) connected to the frame (4, 6) for imparting longitudinal movement in the second direction to the sleeve (20) and expandable jaw structure (30), a source (73) of pressurized hydraulic fluid, an hydraulic fluid circuit connecting the first and second hydraulic cylinders (40, 50) to the source (73) of pressurized fluid and including a circuit control valve (75) having an advance position for directing pressurized fluid to the first and second hydraulic cylinders (40, 50) to extend the cylinders, and a neutral position for preventing pressurized fluid from flowing to the cylinders (40, 50), an expansion cylinder control valve (85) having an open position allowing pressurized fluid to flow to the first hydraulic cylinder (40) to extend the cylinder and a closed position preventing pressurized fluid from flowing to the first cylinder (40), and a pulling cylinder control valve (84) having an open position allowing pressurized fluid to flow to the second hydraulic cylinder (50) to extend the cylinder (50) and a closed position for preventing pressurized fluid from flowing to the second cylinder (50) and a control including first means (Sol-A) to move the circuit control valve (75) to the advance position, second means (Sol-D) to move the expansion cylinder control valve (85) to the closed position, and third means (Sol-C) to move the pulling cylinder control valve (84) to the open position.

5. A tube extracting mechanism as claimed in claim 4, characterized in that a timer (T) is operable to activate the third moving means (Sol-C) after the expansion cylinder control valve (85) has been in the open position for a preset length of time.

6. A tube extracting mechanism as claimed in claim 4 or claim 5, characterized in that the first moving means includes a first electrically actuated solenoid (Sol-A), the second moving means includes a second electrically actuated solenoid (Sol-D), the third moving means includes a third electrically actuated solenoid (Sol-C), in that the circuit control valve (75) has a third position for directing pressurized fluid to the first hydraulic cylinder (40) to retract the cylinder, and in that a fourth electrically actuated solenoid (Sol-B) is operable to move the circuit control valve (75) to said third position.

## Revendications

1. Dispositif d'extraction de tube comportant un châssis allongé (4, 6) définissant une ouverture (12) dans son extrémité avant et un passage (16) s'étendant longitudinalement et en communication avec l'ouverture (12), une plaque arrière (60) placée en arrière du châssis (4, 6), une plaque médiane (63) placée entre la plaque arrière (60) et le châssis (4, 6), un manchon (20) positionné dans le passage (16) et supporté à coulissement par le châssis (4, 6) de façon à exécuter un mouvement longitudinal dans le passage (16) dans une première direction orientée vers l'ouverture (12) et dans une seconde direction opposée à l'ouverture (12), ledit manchon (20) étant relié à ladite plaque médiane (63) de façon à exécuter un mouvement longitudinal à l'unisson avec celle-ci, et une structure à mâchoires expansibles (30) qui est supportée par le manchon (20) afin de se déplacer longitudinalement avec lui au travers de l'ouverture (12), caractérisé en ce que la plaque arrière (60) et la plaque médiane (63) sont reliées (62) de façon à exécuter un mouvement longitudinal à l'unisson, en ce qu'un organe expanseur (41) coopère avec la structure à mâchoires expansibles (30) pour produire l'expansion de ladite structure lors d'un mouvement longitudinal dudit organe expanseur (41) dans ladite première direction, en ce qu'un générateur de force d'expansion (40) est relié à la plaque arrière (60) de façon à se déplacer longitudinalement à l'unisson avec elle et à l'organe expanseur (41) pour le faire déplacer longitudinalement dans la première direction, et en ce qu'un autre générateur de force d'expansion (50) est relié au châssis (4, 6) et à la plaque arrière (60) pour produire un mouvement longitudinal dans la second direction de la plaque arrière (60), de la plaque médiane (63), du manchon (20) et de la structure à mâchoires expansibles (30).

2. Dispositif d'extraction de tubes selon la revendication 1, caractérisé en ce qu'une surface de la structure à mâchoires (30) définit une cavité effilée (35) s'étendant longitudinalement et en ce que l'organe expanseur (41) comprend une partie effilée s'étendant longitudinalement et disposée à l'intérieur de la cavité (35), l'inclinaison longitudinale de la cavité (35) restant essentiellement constante lorsque la structure à mâchoires (30) subit une expansion et l'inclinaison longitudinale de l'organe expanseur (41) étant essentiellement égale à l'inclinaison longitudinale de la cavité (35) de manière que, lorsque l'organe expanseur (41) se déplace longitudinalement par rapport à la structure à mâchoires expansibles (30), la partie effilée de l'organe expanseur (41) et la surface de la structure à mâchoires expansibles (30) qui définit la cavité (35) restent en contact essentiellement sur toute leur longeur commune.

3. Dispositif d'extraction de tube selon l'une des revendications 1 ou 2, caractérisé en ce qu'un contact de butée entre le châssis (4, 6) et la plaque médiane (63) limite le mouvement longitudinal de la plaque médiane (63) dans la première direction et en ce qu'un contact de butée entre la plaque médiane (63) et le générateur de force d'expansion (40) assiste le mouvement du générateur de force d'expansion (40) avec la plaque arrière (60).

4. Dispositif d'extraction de tubes comprenant un châssis allongé (4, 6) définissant une ouverture (12) dans son extrémité avant et un passage (16) s'étendant longitudinalement et en communication ave ladite ouverture (12), un manchon (20) positionné dans le passage (16) et supporté à coulissement par le châssis (4, 6) de façon à exécuter un mouvement longitudinal à l'intérieur du passage (16) dans une première direction orientée vers l'ouverture (12) et dans une seconde direction opposée à l'ouverture, et une structure à mâchoires expansibles (30), qui est supportée par le manchon (20) de façon à se déplacer longitudinalement avec lui au travers de l'ouverture (12), caractérisé en ce qu'il comprend un organe expanseur (41) en communication avec la structure à mâchoires expansibles (30) pour produire une expansion de ladite structure (30) lors d'un mouvement longitudinal de l'organe expanseur (41) dans la première direction, un générateur de force d'expansion comportant un premier cylindre hydraulique (40) déplaçable alternativement et longitudinalement pour faire déplacer longitudinalement l'organe expanseur (41) dans la première direction, un générateur de force de traction comprenant un second cylindre hydraulique (50) deplaçable alternativement et longitudinalement et accouplé au châssis (4, 6) pour faire déplacer longitudinalement dans la seconde direction le manchon (20) et la structure à mâchoires expansibles (30), une source de fluide hydraulique sous pression (73), à circuit hydraulique reliant le premier et le second cylindre hydraulique (40, 50) à la source (73) de fluide sous pression et comportant un distributeur de commande de circuit (75) pourvu d'une position d'avance servant à diriger du fluide sous pression vers le premier et le second cylindre hydraulique (40, 50) en vue de faire sortir les cylindres, et une position neutre pour empêcher du fluide sous pression de s'écouler vers les cylindres (40, 50), un distributeur de commande de cylindres d'expansion (85) comportant une position d'ouverture permettant à du fluide sous pression de s'écouler vers le premier cylindre hydraulique (40) pour faire sortir ce cylindre et une position de fermeture empêchant du fluide sous pression de s'écouler vers le premier cylindre (40), et un distributeur de commande de cylindre de traction (84) comportant une position d'ouverture permettant à du fluide sous pression de s'écouler vers le second cylindre hydraulique (50) pour assurer la sortie de ce cylindre et une position de fermeture pour empêcher du fluide sous pression de s'écouler vers le second cylindre (50), et en ce qu'il est prévu une commande comportant un premier moyen (électro-aimant A) pour faire déplacer le distributeur de commande de circuit dans la position d'avance, un second moyen (électro-aimant D) pour faire déplacer le distributeur de commande de cylindre d'expansion (85) dans la position de fermeture et un troisième moyen (électro-aimant C) pour faire déplacer le distributeur de commande de cylindre de traction (84) dans la position d'ouverture.

5. Dispositif d'extraction de tubes selon la revendication 4, caractérisé en ce qu'une minuterie (T) intervient pour actionner le troisième moyen d'entraînement (électro-aimant C) après que le distributeur de commande de cylindre d'expansion (85) est resté dans la position d'ouverture pendant une période de durée préréglée.

6. Dispositif d'extraction de tubes selon l'une des revendications 4 ou 5, caractérisé en ce que le premier moyen d'entraînement comprend un premier électro-aimant (A), en ce que le second moyen d'entraînement comprend un second électro-aimant (D), en ce que le troisième moyen d'entraînement comprend un troisième électro-aimant (C), en ce que le distributeur de commande de circuit (75) comporte une troisième position pour diriger du fluide sous pression vers le premier cylindre hydraulique (40) et sa rétraction et en ce qu'un quatrième électro-aimant (B) peut être actionné pour amener le distributeur de commande de circuit (75) dans ladite troisième position.

**Patentansprüche**

1. Vorrichtung zum Ausziehen von Rohren mit einem langgestreckten Rahmen (4, 6), der eine an seinem vorderen Ende Vorgesehene Öffnung (12) und einen Längskanal (16) begrenzt, der mit der Öffnung (12) in Verbindung steht, einer hinteren Platte (60), die hinter dem Rahmen (4, 6) angeordnet ist, einer mittleren Platte (63), die zwischen der hinteren Platte (60) und dem Rahmen (4, 6) angeordnet ist, einer in dem Kanal (16) angeordneten Hülse (20), die von dem Rahmen (4, 6) getragen und relativ zu ihm in dem Kanal (16) in einer ersten Richtung zu der Öffnung (12) hin und in einer zweiten Richtung von der Öffnung (12) weg längsverschiebbar und mit der mittleren Platte (63) auf gemeinsame Längsbewegung verbunden ist, und einer spreizbaren Backenanordnung (30), die von der Hülse (20) getragen und mit ihr gemeinsam durch die Öffnung (12) hindurch längsbewegbar ist, dadurch gekennzeichnet, daß die hintere Platte (60) und die mittlere Platte (63) auf gemeinsame Bewegung miteinander verbunden sind (62), daß mit der spreizbaren Backenanordnung (30) eine Spreizeinrichtung (41) derart zusammenwirkt, daß bei einer längsbewegung der Spreizeinrichtung (41)

in der genannten ersten Richtung die Backenanordnung gespreizt wird, daß ein Spreiz-Kraftantrieb (40) mit der hinteren Platte (60) auf gemeinsame Längsbewegung und mit der Spreizeinrichtung (41) derart verbunden ist, daß er dieser eine Längsbewegung in der ersten Richtung erteilen kann, und daß mit dem Rahmen (4, 6) und der hinteren Platte ein weiterer Kraftantrieb (50) verbunden ist, der dazu dient, der hinteren Platte (60), der mittleren Platte (63), der Hülse (20) und der spreizbaren Backenanordnung (30) eine Längsbewegung in der zweiten Richtung zu erteilen.

2. Vorrichtung zum Ausziehen von Rohren nach Anspruch 1, dadurch gekennzeichnet, daß eine Fläche der Backenanordnung (30) einen sich in der Längsrichtung erstreckenden und sich verjüngenden Hohlraum (35) begrenzt und daß die Spreizeinrichtung (41) einen sich in der Längsrichtung erstreckenden und sich verjüngenden Teil besitzt, der in dem Hohlraum (35) angeordnet ist, wobei die Verjüngung des Hohlraums (35) bei einem Spreizen der Backenanordnung (30) im wesentlichen konstant bleibt und die Längsverjüngung der Spreizeinrichtung (41) im wesentlichen gleich der Längsverjüngung des Hohlraumes (35) ist, so daß bei einer Längsbewegung der Spreizeinrichtung (41) in der Längsrichtung relativ zu der spreizbaren Backenanordnung (30) der sich verjüngende Teil der Spreizeinrichtung (41) und die den Hohlraum (35) begrenzende Fläche der spreizbaren Backenanordnung (30) im wesentlichen auf ihrer ganzen Länge miteinander in Berührung bleiben.

3. Vorrichtung zum Ausziehen von Rohren nach Anspruch 2, dadurch gekennzeichnet, daß die Längsbewegung der mittleren Platte (63) in der ersten Richtung durch eine stumpfe Berührung zwischen dem Rahmen (4, 6) und der mittleren Platte (63) begrenzt wird, und daß die Bewegung des Spreiz-Kraftantriebes (40) mit der hinteren Platte (60) durch die stumpfe Berührung zwischen der mittleren Platte (63) und dem Spreiz-Kraftantrieb (40) unterstützt wird.

4. Vorrichtung zum Ausziehen von Rohren mit einem langgestreckten Rahmen (4, 6), der eine an seinem vorderen Ende vorgesehene Öffnung (12) und einen Längskanal (16) begrenzt, der mit der Öffnung (12) in Verbindung steht, einer in dem Kanal (16) angeordneten und von dem Rahmen (4, 6) getragenen Hülse (20), einer in dem Kanal (16) angeordneten Hülse (20), die von dem Rahmen (4, 6) getragen und relativ zu ihm in dem Kanal (16) in einer ersten Richtung zu der Öffnung (12) hin und in einer zweiten Richtung von der Öffnung (12) weg längsverschiebbar und mit der mittleren Platte (63) auf gemeinsame Längsbewegung verbunden ist, und einer spreizbaren Backenanordnung (30), die von der Hülse (20) getragen und mit ihr gemeinsam durch die Öffnung (12) hindurch längsbewegbar ist, gekennzeichnet durch eine Spreizeinrichtung (41), die mit der spreizbaren Backenanordnung (30) in Verbindung steht und bei einer Längsbewegung der Spreizeinrichtung (41) in der ersten Richtung die Backenanordnung (30) spreizt, einen Spreiz-Kraftantrieb mit einem ersten in der Längsrichtung hin- und herbewegbaren Hydrozylinder (40), der dazu dient, der Spreizeinrichtung (41) eine Längsbewegung in der ersten Richtung zu erteilen, einen Zieh-Kraftantrieb mit einem zweiten in der Längsrichtung hin- und herbewegbaren Hydrozylinder (50), der mit dem Rahmen (4, 6) verbunden ist und dazu dient, der Hülse (20) und der spreizbaren Backenanordnung (30) eine Längsbewegung in der zweiten Richtung zu erteilen, eine Quelle (73) einer unter Druck stehenden Druckflüssigkeit, ein Hydrauliksystem, das den ersten und den zweiten Hydraulikzylinder (40, 50) mit der Druckflüssigkeitsquelle (73) verbindet und ein Hydraulik-Steuerventil (75) besitzt, das eine Vorschubstellung, hat, in der es dem ersten und dem zweiten Hydrozylinder (40, 50) unter Druck stehende Flüssigkeit zum Ausfahren der Zylinder zuführt, und eine neutrale Stellung, in der es eine Zufuhr von unter Druck stehender Flüssigkeit zu den Zylindern (40, 50) verhindert, ein Spreizzylinder-Steuerventil (85), das eine Offenstellung besitzt, in der es eine Zufuhr von Druckflüssigkeit zu dem ersten Hydrozylinder (40) zum Ausfahren desselben gestattet, und eine Schließstellung, in der es eine Zufuhr von unter Druck stehender Flüssigkeit zu dem ersten Zylinder (40) verhindert, ein Ziehzylinder-Steuerventil (84), das ine Offenstellung hat, in der es eine Zufuhr von Druckflüssigkeit zu dem zweiten Hydrozylinder (50) zum Ausfahren desselben gestattet, und eine Schließstellung, in der es eine Zufuhr von unter Druck stehender Flüssigkeit zu dem zweiten Zylinder (50) verhindert, und eine Bedienungseinrichtung mit einer ersten Betätigungseinrichtung (Sol-A) zum Bewegen des Hydraulik-Steuerventils (75) in die Vorschubstellung, einer zweiten Betätigungseinrichtung (Sol-D) zum Bewegen des Spreizzylinder- Steuerventils (85) in die Schließstellung und einer dritten Betätigungseinrichtung (Sol-C) zum Bewegen des Ziehzylinder- Steuerventils (84) in die Offenstellung.

5. Vorrichtung zum Ausziehen von Rohren nach Anspruch 4, dadurch gekennzeichnet, daß ein Zeitschalter (T) vorgesehen ist, der dazu dient, die dritte Betätigungseinrichtung das dritte Stellglied (Sol-C) zu betätigen, wenn sich das Spreizzylinder-Steuerventil (85) während einer voreingestellten Zeitspanne in seiner Offenstellung befunden hat.

6. Vorrichtung zum Ausziehen von Rohren nach Anspruch 4 oder 5, dadurch gekennzeichnet, daß die erste Betätigungseinrichtung einen ersten elektrisch betätigten Elektromagneten (Sol-A), die zweite Betätigungseinrichtung einen zweiten elektrisch betätigten Elektromagneten (Sol-D) und die dritte Betätigungseinrichtung einen dritten elektrisch betätigten Elektromagneten (Sol-C) besitzt, daß das Hydraulik-Steuerventil (75) eine dritte Stellung besitzt, in der es dem ersten Hydrozylinder (40) unter Druck stehende Flüssigkeit zuführt, um diesen Zylinder zurückzuziehen, und daß ein vierter elektrisch betätigter Elektromagnet (Sol-B) dazu dient, das Hydraulik-Steuerventil (75) in die dritte Stellung zu bewegen.

_FIG. I_

FIG. 2

*FIG. 3*

FIG. 4

0 005 463

**0 005 463**

_FIG. 5_

_FIG. 6_

FIG. 5A